# EUROPEAN PATENT APPLICATION

(11) **EP 4 310 817 A1**
(43) Date of publication of application: **24.01.2024**
(21) Application number: 23185391.2
(22) Date of filing: 13.07.2023
(51) Int. Cl.: G09B 9/20, G09B 9/30, G09B 9/32

(54) **REDUCTION IN MOTION SICKNESS**

(30) Priority: 19.07.2022 US 202217868658
(71) Applicant: Goodrich Lighting Systems, Inc., Phoenix, AZ 85040-1169 (US)
(72) Inventor: ST. ROCK, Brian E., Andover, CT (US); KRENZ, Michael J., Roscoe, IL (US)
(74) Representative: Dehns

(57) **Abstract**

A system for displaying an artificial horizon in an enclosed space. The system includes a first plurality of visual effect sources located in the enclosed space and configured to generate a first visual effect of the artificial horizon consistent with an orientation detected by an orientation sensor (302). The system further includes a second plurality of visual effect sources separate from the first plurality of visual effect sources and located in the enclosed space and configured to generate a second visual effect of the artificial horizon different from the first visual effect consistent with the orientation detected by the orientation sensor (302).

## Description

### FIELD

The present disclosure relates to systems and methods for reducing motion sickness, and more specifically, to reducing motion sickness in enclosed spaces using lighting cues.

### BACKGROUND

Motion sickness is most often caused when the human brain becomes confused on bodily orientation when presented with conflicting visual and/or vestibular system information. Some studies suggest as many as 1 in 10 people are susceptible to motion sickness in cars, boats, trains, or planes, among others.

In humans, the visual sensory channel is highly dominant and has been attributed to contribute up to 80% of motion cues and interpretation. Indeed, modern flight simulators that simulate motion utilize visual cues much more than motion platform movement to induce the desired sensations of motion. Fixed base flight simulators have been found to be extremely effective using only vision-based motion cueing as well. Similarly, "dark" amusement park rides are also extremely effective in inducing the feeling of motion when there is none, mostly through visual effects. However, while current systems are suitable for inducing the feeling of motion, these systems also induce motion sickness.

### SUMMARY

Disclosed herein is a system for reducing motion sickness using lighting cues. The reduction in motion sickness is provided by combining the known strong influence of visual effects demonstrated effectivity of flight simulators and park rides in an alternate manner. That is, the disclosed system utilizes lighting effects onboard moving vehicles, i.e., boats, trains, planes, shuttles, or cars, among others, to project an artificial horizon that coincides with vestibular sensing being experienced by the user thereby synchronizing the stimulus from the eyes of the user to the vestibular canals of the user, which are both provided to the brain of the user. By synchronizing the visual stimulus to the vestibular stimulus, any motion sickness that may be experienced by the user may be reduced or eliminated.

A system for displaying an artificial horizon in an enclosed space is disclosed herein. The system includes a first plurality of visual effect sources located in the enclosed space and configured to generate a first visual effect of the artificial horizon consistent with an orientation detected by an orientation sensor; and a second plurality of visual effect sources separate from the first plurality of visual effect sources and located in the enclosed space and configured to generate a second visual effect of the artificial horizon different from the first visual effect consistent with the orientation detected by the orientation sensor.

In various embodiments, the system further includes a controller configured to: determine a configuration for a display of the artificial horizon consistent with the orientation detected by the orientation sensor; and send a plurality of signals to the first plurality of visual effect sources and the second plurality of visual effect sources, each signal of the plurality of signals for a respective visual effect source in the first plurality of visual effect sources and the second plurality of visual effect sources.

In various embodiments, the controller modifies at least one of the first visual effect or the second visual effect based on an acceleration of the enclosed space. In various embodiments, each signal in the plurality of signals indicates at least one of a color tint, color hue, brightness, filtering, or shuttering to be executed by a respective one of the first plurality of visual effect sources or a respective one of the second plurality of visual effect sources. In various embodiments, the system further includes the orientation sensor electrically coupled to the controller and configured to detect the orientation, wherein the orientation is consistent with an environment outside the enclosed space. In various embodiments, the system further includes a visual effect modulator electrically coupled to the controller and configured to receive the plurality of signals from the controller and configured to adjust one or more of the plurality of signals based on a type of a respective one of the first plurality of visual effect sources or a respective one of the second plurality of visual effect sources.

In various embodiments, each visual effect source in the first plurality of visual effect sources and the second plurality of visual effect sources are at least one of a projector, a light strip, light emitting diodes (LED), or an organic light-emitting diode (OLED) display. In various embodiments, the enclosed space is void of any external cues. In various embodiments, the enclosed space is located in an hyperloop capsule.

Also disclosed herein is a control system for displaying an artificial horizon in an enclosed space. The control system includes a first plurality of visual effect sources configured to generate a first visual effect; a second plurality of visual effect sources separate from the first plurality of visual effect sources and configured to generate a second visual effect; a controller; and a tangible, non-transitory memory configured to communicate with the controller, the tangible, non-transitory memory having instructions stored thereon that, in response to execution by the controller, cause the controller to perform operations including: determining a configuration for a display of the artificial horizon consistent with an orientation detected by an orientation sensor; and sending a plurality of signals to the first plurality of visual effect sources and the second plurality of visual effect sources, each signal of the plurality of signals for a respective visual effect source in the first plurality of visual effect sources and the second plurality of visual effect sources.

In various embodiments, the operations further include: receiving, from an orientation sensor, the orientation, wherein the orientation is consistent with an environment outside the enclosed space; and determining the configuration for the display of the artificial horizon consistent with the orientation detected by the orientation sensor. In various embodiments, the operations further include: modifying at least one of the first visual effect or the second visual effect based on an acceleration of the enclosed space. In various embodiments, the control system further includes a visual effect modulator configured to receive the plurality of signals from the controller and configured to adjust one or more of the plurality of signals based on a type of a respective one of the first plurality of visual effect sources or a respective one of the second plurality of visual effect sources. In various embodiments, the second visual effect is different from the first visual effect. In various embodiments, the enclosed space is void of any external cues

Also disclosed herein is a method for displaying an artificial horizon in an enclosed space. The method includes generating, by a first plurality of visual effect sources located in the enclosed space, a first visual effect of the artificial horizon consistent with an orientation detected by an orientation sensor; and generating, by a second plurality of visual effect sources separate from the first plurality of visual effect sources, a second visual effect of the artificial horizon different from the first visual effect consistent with the orientation detected by the orientation sensor.

In various embodiments, the method further includes determining, by a controller, a configuration for a display of the artificial horizon consistent with the orientation detected by the orientation sensor; and sending, by the controller, a plurality of signals to the first plurality of visual effect sources and the second plurality of visual effect sources, each signal of the plurality of signals for a respective visual effect source in the first plurality of visual effect sources and the second plurality of visual effect sources. In various embodiments, the method further includes modifying, by the controller, at least one of the first visual effect or the second visual effect based on an acceleration of the enclosed space. In various embodiments, the method further includes modulating, by a visual effect modulator, one or more of the plurality of signals based on a type of a respective one of the first plurality of visual effect sources or a respective one of the second plurality of visual effect sources. In various embodiments, the method further includes receiving, from an orientation sensor, the orientation, wherein the orientation is consistent with an environment outside the enclosed space.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a hyperloop capsule including various enclosed spaces, in accordance with various embodiments.
FIG. 2 illustrates an internal structure of a hyperloop capsule, in accordance with various embodiments.
FIG. 3 is a block diagram illustrating a system for reducing motion system in an enclosed space, in accordance with various embodiments.
FIG. 4 is a flowchart illustrating a method for reducing motion system in an enclosed space, in accordance with various embodiments.
FIG. 5 illustrates an implementation of the system of FIG. 3, according to various embodiments.
FIG. 6 illustrates a displayed artificial horizon utilizing the system of FIG. 3, according to various embodiments.
FIG. 7 illustrates a displayed artificial horizon utilizing the system of FIG. 3, according to various embodiments.
FIG. 8 illustrates a displayed artificial horizon utilizing the system of FIG. 3, according to various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Disclosed herein is a system and methods for reducing and/or elimination motion sickness experienced by a user in enclosed spaces, especially spaces void of any external cues, such as a hyperloop capsule, internal cabin of a ship, or aircrafts without windows, among others. That is, in enclosed spaces, where the user has no external visual cues to assist in bodily orientation, the user's body/brain relies only the vestibular sensed cues provided by the vestibular canals in the human ears to determine bodily orientation. Relying on only one cue, i.e., the vestibular sense, may cause motion sickness occurs because the human brain cannot make sense of information sent from the eyes in relation to the information sent form the ears. Accordingly, in various embodiments, an orientation sensor, such as an attitude and heading reference system (AHRS) consists of sensors on three axes, provides orientation information, also referred to as attitude information. Utilizing the orientation information, as well as acceleration information that may be derived from the orientation information, the disclosed system processes the orientation and acceleration information to determine how an artificial horizon should be displayed within the enclosed space, thereby providing a visual cue to the user's brain. By providing the second cue, i.e., the artificial horizon, the user's body/brain may correlate the vestibular sensed cues provided by the vestibular canals in the human ears to the visual cues provided by the human eyes to determine bodily orientation, to reduce and/or eliminate motion sickness.

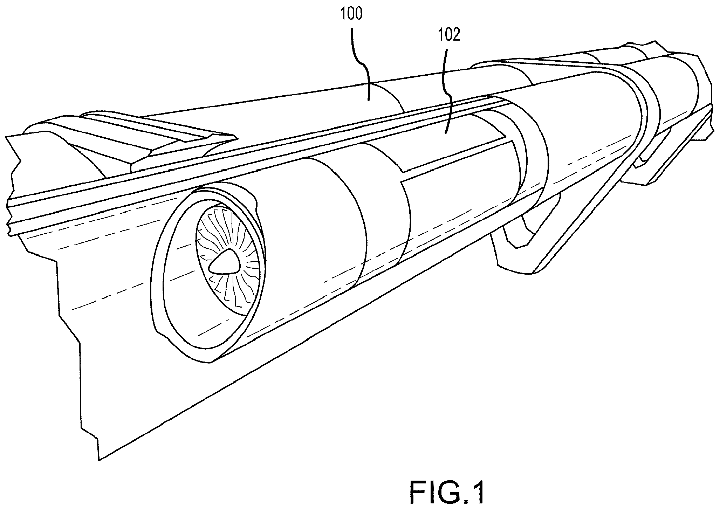

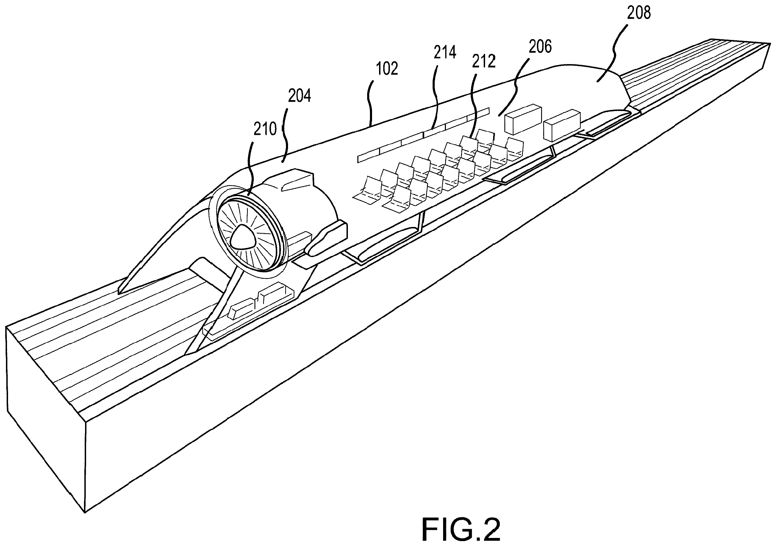

Referring now to FIG. 1, in accordance with various embodiments, a hyperloop 100 is illustrated. The hyperloop 100 is an ultra-high-speed public transportation system in which passengers travel in a capsule 102 at high speeds. The capsule, which may also be referred to as a pod, has or defines one or more enclosed spaces. Turning to FIG. 2, in accordance with various embodiments, an internal structure of the capsule 102 is illustrated. The internal structure of the capsule 102 includes an engine compartment 204, one or more cabin compartment 206, and a cockpit compartment 208. Engine compartment 204 may include one or more engines 210. Cockpit compartment 208 may include seating and controls for the pilot of the capsule 202. Cabin compartment 206 may include seating 212, storage 214, and a system for providing a display of lighting cues that aligns with the vestibular sensing that is being sensed by the users occupying the cabin compartment 206.

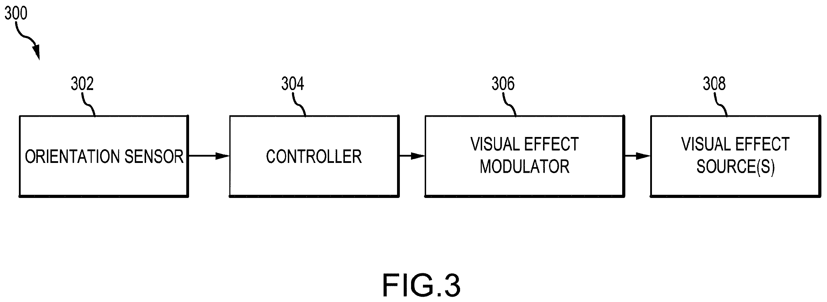

Turning to FIG. 3, a system that may be used to provide lighting cues to reduce motion sickness in an enclosed space is illustrated. The system 300 may include an orientation sensor 302, a controller 304, a visual effect modulator 306, and a plurality of visual effect sources 308. The orientation sensor 302, located within or in proximity to the enclosed space, may include any group of solid-state or microelectromechanical systems (MEMS) gyroscopes, accelerometers, and magnetometers on three axes that provide orientation information for the capsule 102 of FIG. 1. In various embodiments, the term "proximity" is intended to mean within the capsule but may or may not being within a same compartment where the artificial horizon is presented. In various embodiments, the orientation sensor 302 may be an inertial measurement unit (IMU), such as an attitude and heading reference system (AHRS) or a ring-laser gyroscope, among others. The orientation information may include one or more of an attitude or a heading, based on a roll, a pitch, or a yaw, among others, of the vessel. In various embodiments, the attitude is consistent with an environment outside the capsule 102, which may or may not be visible to the user. The orientation sensor 320, which may be electrically coupled to the controller 304, may be configured to provide the orientation information to the controller 304.

The controller 304 may include a logic device such as one or more of a central processing unit (CPU), an accelerated processing unit (APU), a digital signal processor (DSP), a field programmable gate array (FPGA), an application specific integrated circuit (ASIC), or the like. In various embodiments, the controller 304 may further include any non-transitory memory known in the art. The memory may store instructions usable by the logic device to perform operations as described herein.

The controller 304 may be electrically coupled to the orientation sensor 302 and may be configured to receive the orientation information from the orientation sensor 302. The controller 304 may process the orientation information to identify acceleration information associated with the capsule 202 of FIG. 1. In various embodiments, the acceleration information may influence the angle at which an artificial horizon is displayed to better align the senses sensed by the user. In that regard, in an enclosed space with no windows or reference to the outside world and when the enclosed space is accelerated, the human body may feel an upward pitch. To visually present the upward pitch to the user, the orientation sensor 304 adjust the artificial horizon to illustrate that effect thereby keeping the ears and eyes "in sync". The controller 304 may process the orientation information as well as the acceleration information to determine an artificial horizon that aligns with the detected orientation information and/or the acceleration information. Based on the number of visual effect sources 308, for each visual effect source in the set of visual effect sources, controller 304 may determine a sky and ground symbology to be displayed on the walls, ceiling, or floors, among others, of the cabin compartment 206 of the capsule 202 of FIG. 1, via a color tint or hue that should be displayed by the respective visual effect sources 308 or a brightness of the respective visual effect sources 308 to produce a shadowing effect, among others. For example, when an artificial horizon is selected that has a color blue for the upper portion and a color green for the lower potion, then controller 304 may determine that a first set of visual effect sources providing a display for the upper portion of the cabin compartment 206 are to display a blue color tint or hue and that a second set of visual effect sources providing a display for the lower portion of the cabin compartment 106 are to display a green color tint or hue. In various embodiments, the artificial horizon determined by the controller 304 need not be an immediate definition to be effective. That is, the artificial horizon determined by the controller 304 may be subtle changes in shadow and/or intensity of light. In various embodiments, the artificial horizon determined by the controller 304 may be a definitive effect. That is, the artificial horizon determined by the controller 304 may provide a clear, unambiguous definition between the upper and the lower portion of the artificial horizon.

In various embodiments, the artificial horizon displayed by the controller 304 substantially aligns with what is being sensed by the vestibular canals of the inner ear of a human in capsule 202, which correlates to the orientation information provided by the orientation sensor 302. For example, as the capsule 202 moves around a curve, the cabin compartment 206 may tilt between 5 degrees and 45 degrees from normal. However, controller 304 may detect this change in the orientation of the cabin compartment 106 and adjust the visual cues such that the displayed artificial horizon is substantially parallel to a reference line of the cabin compartment 106 within 5 degrees, within 3 degrees, within 2 degrees, or within 1 degree of the reference line. In various embodiments, the reference line corresponds to an actual horizon line separating the upper and the lower portions of the artificial horizon. In various embodiments, the reference line corresponds to an actual horizon offset by an acceleration of the capsule 202 to better align the senses sensed by the user. The terms "substantially," "about," or "approximately" as used herein represent an amount close to the stated amount that still performs a desired function or achieves a desired result. For example, the term "substantially," "about," or "approximately" may refer to an amount that is within 5 degrees, within 3 degrees, within 2 degrees, or within 1 of a stated amount or value. The controller 304, which may be electrically coupled to the controller 304, may be configured to provide the individually determined color tint or hue that should be displayed by the respective visual effect source to the visual effect modulator 306.

The visual effect modulator 306 may be electrically coupled to the controller 304 and may be configured to receive the individually determined color tint or hue that should be displayed by the respective visual effect source from the controller 304. Based on the respective type of visual effect sources 308, which may be electrically coupled to the visual effect modulator 306, the visual effect modulator 306 may adjust the determined color tint or hue prior to sending the instruction to the respective visual effect source. That is, in various embodiments, the visual effect sources 308 may be projectors, light strips, light emitting diodes (LED), organic light-emitting diode (OLED) displays, or any other type of light emitting device, among others. Therefore, a signal for projector to display the color blue may differ from the signal sent to an OLED display to display the color blue. The visual effect modulator 306 may be configured with the identification of a type for each of the visual effect sources 308 and modulate the determined color tint or hue to be displayed by the respective visual effect source based on the identified type. Additionally, in various embodiments, the visual effect modulator 306 may be configured to control other aspects of the lighting through, for example, direct emissions control, use of filters/shutters or any other means of modulating the light intensity to generate the perception of the artificial horizon indicated by the controller 304. Therefore, the visual effect modulator 306 may be configured to provide respective signals to each of the visual effect sources indicating a color tint, color hue, brightness, filtering, or shuttering, among others, to be displayed by respective visual effect source. Each of the visual effect sources 308 may be configured to receive their respective signal ad display, based on the received signal a light emission corresponding to the received signal.

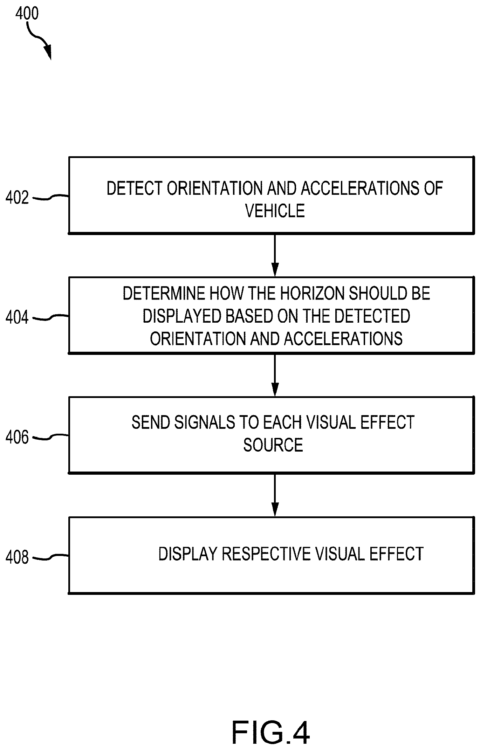

Referring now to FIG. 4, in accordance with various embodiments, a method 400 for displaying an artificial horizon in an enclosed space using lighting cues to reduce motion sickness is illustrated. The method 400 may be performed by a controller 304 described above with respect to FIG. 3. At block 402, the controller 304 receives orientation information from the orientation sensor 302. In various embodiments, controller 304 may be powered on in response to the aircraft powering on. In various embodiments, power on may be performed after resetting the controller 304. At power on, the controller 304 may determine a reference line with regard to a center of gravity parallel to the capsule reference line. At block 404, the controller 304 determines how an artificial horizon should be displayed based on the detected orientation information in relation to the reference line. At block 406, the controller 304 sends a signal to each visual effect source of the visual effect sources 308 indicating at least one of a color tint, color hue, brightness, filtering, or shuttering, among others, to be displayed by respective visual effect source of the visual effect sources 308.

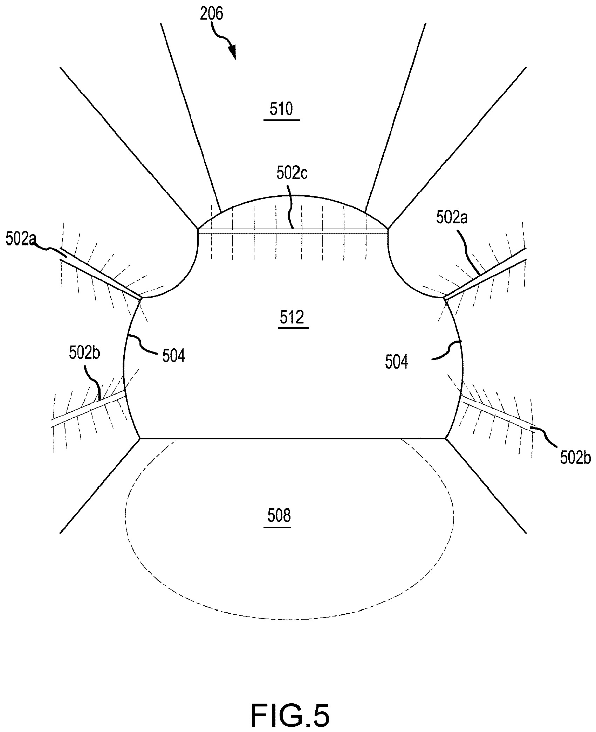

Referring now to FIG. 5, in accordance with various embodiments, an implementation of the system 300 of FIG. 3 in the capsule 102 of FIG. 1 is illustrated. In particular, a system similar to the system 300 of FIG. 3 is implemented in the cabin compartment 206 of FIG. 2. In various embodiments, the illustrated view may be looking toward a front portion of the inside of the cabin compartment 206. In various embodiments, the illustrated view may be looking toward a rear portion of the inside of the cabin compartment 206.

The system includes a plurality of visual effect sources 502a, 502b, and 502c, which may include projectors, light strips, LED displays, OLED displays, or any other type of light emitting device, among others. In various embodiments, visual effect sources 502a are located at the top or substantially near the top of sidewalls 504 and are configured to display lower portions of the artificial horizon determined by the controller 304 onto the floor 508 and opposing sidewall 504. In various embodiments, visual effect sources 502b are located at the bottom or substantially near the bottom of sidewalls 504 and are configured to display upper portions of the artificial horizon determined by the controller 304 onto the ceiling 510 and opposing sidewall 504. In various embodiments, visual effect sources 502c are located at a top or substantially near the top of the front and rear walls 512 of the cabin compartment 206 and are configured to display upper and/or lower portions of the artificial horizon determined by the controller 304 onto the floor 508, opposing front or rear wall 512, and ceiling 510. In various embodiments, additional visual effect sources may also be provided. For example, in various embodiments, an additional visual effect source may be provided at the bottom or substantially near the bottom of the front and rear walls 512 of the cabin compartment 206.

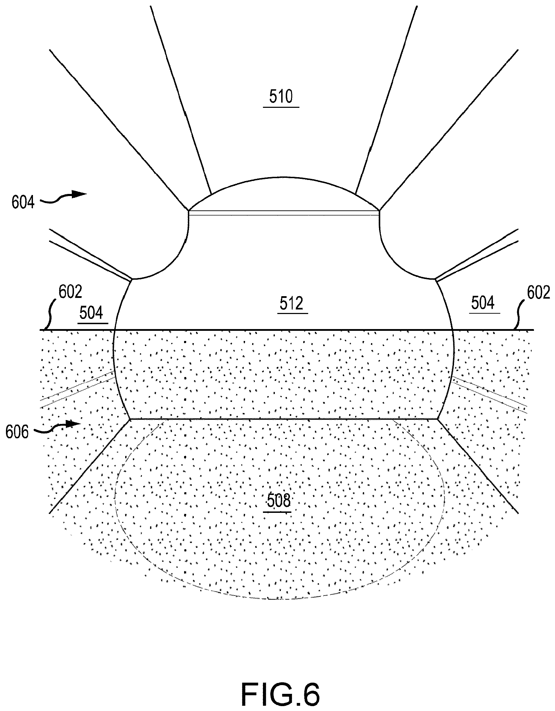

Turning to FIGS. 6, 7, and 8, according to various embodiments, a displayed artificial horizon utilizing the system of FIG. 3 is illustrated. Referring to FIG. 6, in various embodiments, an upper portion 604 of an artificial horizon is displayed divided by horizon line 602 such that the upper portion 604 of the artificial horizon is displayed on an upper portion of the sidewalls 504, an upper portion of the front and/or rear walls 512, and the ceiling 510. Also referring to FIG. 6A, in various embodiments, a lower portion 606 of the artificial horizon is displayed such that the lower portion 606 of the artificial horizon is displayed on a lower portion of the sidewalls 504, a lower portion of the front and/or rear walls 512, and the floor 508.

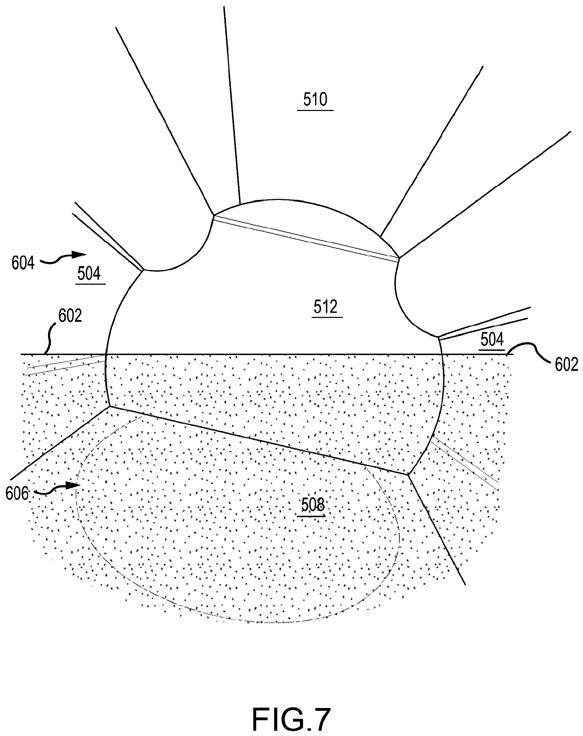

Referring to FIG. 7, as the capsule 202 rolls to make a right turn or curve, in various embodiments, the artificial horizon is displayed consistent with the horizon line 602 detected at power up of the controller 304. Therefore, in various embodiments, the upper portion 604 of the artificial horizon translates up the right sidewall 504 and down the left sidewall 504. Also, in various embodiments, the lower portion 608 of the artificial horizon translates up the right sidewall 504 and down the left sidewall 504.

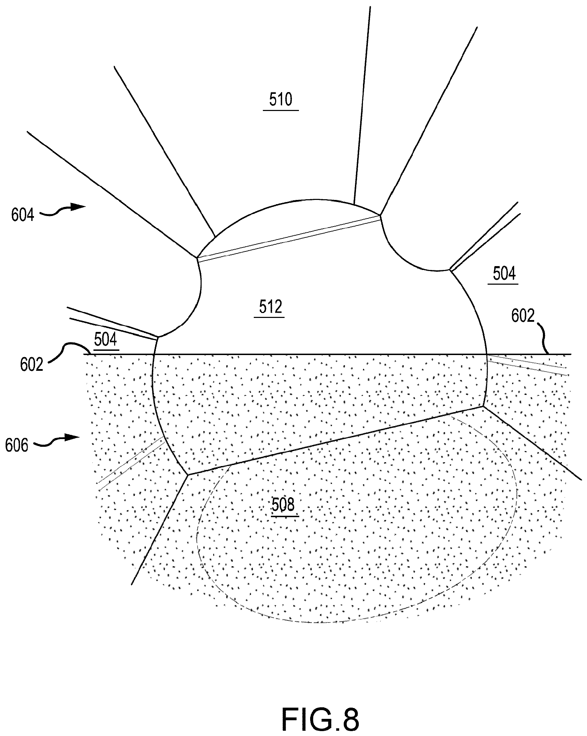

Referring to FIG. 8, as the capsule 202 rolls to make a left turn or curve, in various embodiments, the artificial horizon is displayed consistent with the horizon reference line detected at power up of the controller 304. Therefore, in various embodiments, the upper portion 604 of the artificial horizon translates down the right sidewall 504 and up the left sidewall 504. Also, in various embodiments, the lower portion 606 of the displayed artificial horizon translates down the right sidewall 504 and up the left sidewall 504.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system for displaying an artificial horizon in an enclosed space, the system comprising:
a first plurality of visual effect sources located in the enclosed space and configured to generate a first visual effect of the artificial horizon consistent with an orientation detected by an orientation sensor (302); and
a second plurality of visual effect sources separate from the first plurality of visual effect sources and located in the enclosed space and configured to generate a second visual effect of the artificial horizon different from the first visual effect consistent with the orientation detected by the orientation sensor (302).

2. The system of claim 1, further comprising:
a controller (304) configured to:
determine a configuration for a display of the artificial horizon consistent with the orientation detected by the orientation sensor (302); and
send a plurality of signals to the first plurality of visual effect sources and the second plurality of visual effect sources, each signal of the plurality of signals for a respective visual effect source in the first plurality of visual effect sources and the second plurality of visual effect sources.

3. The system of claim 2, wherein the controller (304) modifies at least one of the first visual effect or the second visual effect based on an acceleration of the enclosed space, and /or wherein each signal in the plurality of signals indicates at least one of a color tint, color hue, brightness, filtering, or shuttering to be executed by a respective one of the first plurality of visual effect sources or a respective one of the second plurality of visual effect sources.

4. The system of claim 2, further comprising:
the orientation sensor (302) electrically coupled to the controller (304) and configured to detect the orientation, wherein the orientation is consistent with an environment outside the enclosed space, and/ or further comprising:
a visual effect modulator (306) electrically coupled to the controller (304) and configured to receive the plurality of signals from the controller (304) and configured to adjust one or more of the plurality of signals based on a type of a respective one of the first plurality of visual effect sources or a respective one of the second plurality of visual effect sources.

5. The system of any preceding claim, wherein each visual effect source in the first plurality of visual effect sources and the second plurality of visual effect sources are at least one of a projector, a light strip, light emitting diodes (LED), or an organic light-emitting diode (OLED) display.

6. The system of any preceding claim, wherein the enclosed space is void of any external cues, or wherein the enclosed space is located in an hyperloop capsule.

7. A control system for displaying an artificial horizon in an enclosed space, the control system comprising:
a first plurality of visual effect sources configured to generate a first visual effect;
a second plurality of visual effect sources separate from the first plurality of visual effect sources and configured to generate a second visual effect;
a controller (304); and
a tangible, non-transitory memory configured to communicate with the controller (304), the tangible, non-transitory memory having instructions stored thereon that, in response to execution by the controller (304), cause the controller (304) to perform operations comprising:
determining a configuration for a display of the artificial horizon consistent with an orientation detected by an orientation sensor (302); and
sending a plurality of signals to the first plurality of visual effect sources and the second plurality of visual effect sources, each signal of the plurality of signals for a respective visual effect source in the first plurality of visual effect sources and the second plurality of visual effect sources.

8. The control system of claim 7, wherein the operations further comprise:
receiving, from an orientation sensor (302), the orientation, wherein the orientation is consistent with an environment outside the enclosed space; and
determining the configuration for the display of the artificial horizon consistent with the orientation detected by the orientation sensor (302).

9. The control system of claim 7 or 8, wherein the operations further comprise:
modifying at least one of the first visual effect or the second visual effect based on an acceleration of the enclosed space.

10. The control system of any of claims 7 to 9, further comprising:
a visual effect modulator (306) configured to receive the plurality of signals from the controller (304) and configured to adjust one or more of the plurality of signals based on a type of a respective one of the first plurality of visual effect sources or a respective one of the second plurality of visual effect sources.

11. The control system of any of claims 7 to 10, wherein the second visual effect is different from the first visual effect, and/or wherein the enclosed space is void of any external cues.

12. A method for displaying an artificial horizon in an enclosed space, the method comprising:
generating, by a first plurality of visual effect sources located in the enclosed space, a first visual effect of the artificial horizon consistent with an orientation detected by an orientation sensor (302); and
generating, by a second plurality of visual effect sources separate from the first plurality of visual effect sources, a second visual effect of the artificial horizon different from the first visual effect consistent with the orientation detected by the orientation sensor (302).

13. The method of claim 12, further comprising:
determining, by a controller (304), a configuration for a display of the artificial horizon consistent with the orientation detected by the orientation sensor (302); and
sending, by the controller (304), a plurality of signals to the first plurality of visual effect sources and the second plurality of visual effect sources, each signal of the plurality of signals for a respective visual effect source in the first plurality of visual effect sources and the second plurality of visual effect sources.

14. The method of claim 12 or 13, further comprising:
modifying, by the controller (304), at least one of the first visual effect or the second visual effect based on an acceleration of the enclosed space.

15. The method of claim 13, further comprising:
modulating, by a visual effect modulator (306), one or more of the plurality of signals based on a type of a respective one of the first plurality of visual effect sources or a respective one of the second plurality of visual effect sources, and/or further comprising:
receiving, from an orientation sensor (302), the orientation, wherein the orientation is consistent with an environment outside the enclosed space.
